# EUROPEAN PATENT SPECIFICATION

(11) **EP 3 885 425 B1**
(45) Date of publication and mention of the grant of the patent: **28.06.2023**
(21) Application number: 19887436.4
(22) Date of filing: 21.11.2019
(51) Int. Cl.: C10N 10/02, C10N 10/04, C10N 20/00, C10N 20/02, C10N 30/00, C10N 30/06, C10N 30/08, C10N 40/02, C10N 50/10, F16C 19/34, C10M 169/04, F16C 33/66, F16C 19/36, C10N 10/06, C10N 30/02

(54) **GREASE COMPOSITION FOR TAPERED ROLLER BEARING**
SCHMIERFETTZUSAMMENSETZUNG FÜR KEGELROLLENLAGER
COMPOSITION DE GRAISSE POUR ROULEMENT À ROULEAUX CONIQUES

(30) Priority: 21.11.2018 JP 2018218351
(43) Date of publication of application: 29.09.2021
(73) Proprietor: Kyodo Yushi Co., Ltd., Fujisawa-shi, Kanagawa 251-8588 (JP)
(72) Inventor: ISA Kazuki, Fujisawa-shi, Kanagawa 251-8588 (JP); TAKEYAMA Yuki, Fujisawa-shi, Kanagawa 251-8588 (JP); SATO Yuta, Fujisawa-shi, Kanagawa 251-8588 (JP)
(74) Representative: Cabinet Beau de Loménie
(86) International application number: PCT/JP2019/045618
(87) International publication number: WO 2020/105702

(56) References cited:
- EP-A1- 3 118 287
- WO-A1-2013/031705
- JP-A- 2004 018 725
- JP-A- 2009 191 173
- JP-A- 2009 209 179
- JP-A- 2011 052 050
- JP-A- 2015 229 705

## Description

### Technical Field

The present invention relates to a grease composition.

### Background Art

Grease compositions used as lubricants for use in rolling-element bearings such as tapered roller bearings generally contain three components, a thickener, a base oil, and an additive. For example, tapered roller bearings are used widely as bearings for supporting axles of vehicles typified by railroad vehicles and automobiles. For example, rolling-element bearings for supporting axles of automobiles include ball-type hub units using balls as rolling elements and tapered-type hub units using tapered rollers, and tapered-type hub units and tapered roller bearings using tapered rollers are applied to automobiles having large vehicle-body masses such as large-sized vehicles typified by SUVs and pickup trucks and commercial trucks in order to support larger loads, as described in Non Patent Literature 1 and Non Patent Literature 2. However, in the case where tapered-type hub units and tapered roller bearings are used, although a larger load can be supported, these tapered-type hub units and tapered roller bearings have more portions of sliding lubrication typified by lubrications between roller end faces and flanges and between rollers and cage than ball-type hub units, there arise problems of wear and peeling.

In addition, as described in Non Patent Literature 3, there is an increasing demand for reduction in torque for tapered roller bearings used in transmissions and the like, in order to improve the fuel consumptions of automobiles. However, tapered-type bearings have higher bearing torques than ball-type bearings and thus have issues in reduction in torque.

Moreover, expansion of the environments for use causes the operating temperature to expand even to lower temperatures and is increasing a demand for a low-temperature performance associated with the low-temperature fluidity of lubricants, such as fretting wears, which occur at the time of railway transport under low temperature environments, and cold start performances, and the like.

Hence, it is necessary for grease compositions that are applied to tapered-type hub units and tapered roller bearings using tapered rollers to be capable of improving wear resistances, torque reductions, and low-temperature performances.

As a grease composition made with durability and anti-fretting wear of tapered-type hub units and tapered roller bearings using tapered rollers taken into consideration, a grease that uses an aromatic diurea as the thickener, a mineral oil and/or a synthetic hydrocarbon oil as the base oil, and an organic molybdenum compound as the additive has been proposed (Patent Literature 1). Patent Literature 1 however fails to mention the torque reduction and the low-temperature performance. In addition, as a grease composition that suppresses the fretting wear under a low temperature environment, a grease composition that uses an alicyclic aliphatic diurea as the thickener, a mineral oil as the base oil, and an amine phosphate as the additive has been proposed (Patent Literature 2). Patent Literature 2 however fails to mention the cold start performance and also assumes that the rolling elements are not tapered rollers but balls for the fretting wear under a low temperature environment.

As described above, for grease compositions that are applied to tapered-type hub units and tapered roller bearings using tapered rollers, there are demands for wear resistance, torque reduction, and low-temperature performance in conjunction with the recent expansion of environments for use.

### Citation List

### Patent Literature

Patent Literature 1: Japanese Patent Application Publication No. 2006-077056
Patent Literature 2: Japanese Patent Application Publication No. 2014-118467

### Non Patent Literature

Non Patent Literature 1: ZIDOUSYA GIJUTSU HANDOBUKKU, SEKKEI-HEN 2, DAI 7 SHO SASUPENSYON, ASUKURU, TAIYA, HOI-RU 7 (Automotive Technology Handbook, Design Edition, Chapter 7 Suspensions, Axles, Tires, Wheel, 7), pp. 496 to 501
Non Patent Literature 2: GEKKAN TORAIBOROGI- 2006, 10 TOKUSYU ZIDOUSYA NO TORAIBOROGI- HABUYUNITTO BEARINGU NIOKERU TE-PA-RO-RA-BEARINGU NO GUUTSU DOUKOU (Monthly Tribology 2006.10, Feature - Tribology of Automobiles, Technological Trend of Tapered Roller Bearings in Hub-unit Bearings), pp 44 to 45
Non Patent Literature 3: NSK Technical Journal No. 690 (2018) ENSUIKOROZIKUUKE NO TEIFURIKUSYON GUUTSU (Low-Friction Technologies of Tapered Roller Bearings), pp 51 to 59

According to JP 2004-018725 A, a biodegradable grease comprises an ester oil having 70 to 250 mm²/s dynamic viscosity at 40°C in an amount of ≥50 wt.% based on a total amount of a base oil.

EP 3 118 287 A1 shows a grease composition for a wheel bearing, containing (a) a base oil consisting of a mineral oil and a synthetic hydrocarbon oil, wherein the ratio of the synthetic hydrocarbon oil to the total amount of the mineral oil and the synthetic hydrocarbon oil is 40 to 60 mass%, and the base oil has a kinematic viscosity at 40°C of 40 to 65 mm²/s; (b) a thickener of formula (3), which is defined below; (c) an amine type antioxidant; and (d) an amine phosphate type antiwear agent.

### Summary of Invention

### Problems to be solved by the invention

Hence, an object of the present invention is to provide a grease composition that exhibits excellent wear resistance, peel resistance, torque reduction, and low-temperature performance in a tapered roller bearing.

### Means for solution of the problems

The grease composition for a tapered roller bearing of the invention is defined in the claims.

### Advantageous Effects of Invention

The grease composition of the present invention exhibits excellent wear resistance, peel resistance, torque reduction, and low-temperature performance in a tapered roller bearing.

### Description of Embodiments

### <(a) Additive>

An additive used in the present invention includes at least one compound selected from the group consisting of metallic salts each having a metallic group having a valence of 2 as an essential component. The metallic salts may be salts of organic acids or inorganic acids.

The organic metallic salt having a metallic group having a valence of 2 is preferably a compound represented by the following formula (1):

[R4-SO₃]M¹ (1)

wherein R4 represents an alkyl group, an alkenyl group, an alkyl naphthyl group, a dialkyl naphthyl group, an alkyl phenyl group, and a petroleum high boiling point fraction residue, the alkyl or alkenyl is linear or branched and has 2 to 22 carbon atoms, and M¹ represents an alkaline earth metal or zinc. M¹ is preferably calcium or zinc, and more preferably calcium.

The metallic salt of an organic sulfonic acid used in the present invention may be a calcium salt or zinc salt of an alkyl benzenesulfonic acid, a calcium salt or zinc salt of dinonylnaphthalenesulfonic acid, or a highly basic salt of these. Among these, highly basic salts of calcium salts of alkyl benzenesulfonic acids and zinc salts of dinonylnaphthalenesulfonic acids are preferable.

The total base number (TBN) of the metallic salt of the organic sulfonic acid is preferably 0.1 to 500 mg KOH/g, more preferably 50 to 500 mg KOH/g, which is highly basic, and further preferably 300 to 500 mg KOH/g, from the viewpoint of wear resistance and torque reduction. Note that, in the case where 2 or more metallic salts of organic sulfonic acids are used together, the sum of the total base numbers of the multiple types is preferably within the above ranges.

In particular, it is preferable that a highly basic salt of a calcium salt of an alkyl benzenesulfonic acid having a TBN of 300 to 500 mg KOH/g be contained.

The content of the organic metallic salt is preferably 0.1 to 10% by mass, more preferably 0.3 to 7% by mass, and further preferably 0.5 to 4% by mass, of the grease composition.

The inorganic metallic salt having a metallic group having a valence of 2 is preferably a carbonate represented by the following formula (2):

M²CO₃ (2)

wherein M² represents an alkaline earth metal or zinc.

The carbonate having a metallic group having a valence of 2 is preferably at least one selected from the group consisting of calcium carbonate and zinc carbonate.

The content of the inorganic metallic salt is preferably 0.1 to 10% by mass, more preferably 0.5 to 7% by mass, and further preferably 1 to 6% by mass, of the grease composition.

The composition of the present invention preferably contains both of an organic metallic salt having a metallic group having a valence of 2 and an inorganic metallic salt having a metallic group having a valence of 2. In the case where the composition of the present invention contains both of an organic metallic salt having a metallic group having a valence of 2 and an inorganic metallic salt having a metallic group having a valence of 2, the total amount of these is preferably 0.2 to 10% by mass, more preferably 2 to 8% by mass, and further preferably 4 to 7% by mass, based on the total mass of the composition of the present invention.

### <(b) Base oil>

The base oil used in the grease composition of the present invention contains a synthetic oil having a viscosity index of 110 or more and a pour point of -35°C or less, as an essential component. The synthetic oil is a synthetic hydrocarbon oil.

The viscosity index of the synthetic oil is more preferably 120 or more, further preferably 125 or more, and further preferably 130 or more, from the viewpoint of low-temperature performance and torque reduction.

The pour point of the synthetic oil is preferably -35°C or less, more preferably -40°C or less, further preferably -50°C or less, and particularly preferably -60°C or less, from the viewpoint of low-temperature performance.

The proportion of the synthetic oil in the base oil containing the synthetic oil is 40% by mass or more, from the viewpoint of low-temperature performance. The proportion is more preferably 60% by mass or more, and further preferably 80% by mass or more.

The viscosity index of the entire base oil is preferably 100 or more, more preferably 110 or more, and further preferably 125 or more, from the viewpoint of wear resistance, peel resistance, and torque reduction.

The pour point of the entire base oil is preferably -20°C or less, more preferably -30°C or less, further preferably -35°C or less, further more preferably -40°C or less, particularly preferably -50°C or less, and most preferably -60°C or less, from the viewpoint of low-temperature performance.

The kinematic viscosity of the synthetic oil at 40°C is preferably 15 to 5000 mm²/s, more preferably 15 mm²/s to 1000 mm²/s, and further preferably 15 to 400 mm²/s, from the viewpoint of low-temperature performance and torque reduction.

The kinematic viscosity of the entire base oil at 40°C is preferably 20 to 300 mm²/s, more preferably 30 to 200 mm²/s, further preferably 30 to 100 mm²/s, and particularly preferably 50 to 80 mm²/s, from the viewpoint of wear resistance, peel resistance, and torque reduction.

The synthetic oil in the base oil containing the synthetic oil optionally contains at least one selected from an ether-based synthetic oil and an ester-based synthetic oil, and must contain a synthetic hydrocarbon oil.

The synthetic hydrocarbon oil is contained from the viewpoint of torque reduction and low-temperature performance.

As the ether-based synthetic oil, an alkyl diphenyl ether-based synthetic oil is preferable.

The ester-based synthetic oil includes all ester-based synthetic oils such as monoesters, diesters, polyolesters, and complex esters. One of them may be used alone, or two or more ester-based synthetic oils may be blended as appropriate. In particular, a polyolester is preferable. As the polyolester, an ester of a neopentyl-type polyol such as trimethylolpropane, pentaerythritol, or dipentaerythritol with an aliphatic, linear or branched, saturated or unsaturated monocarboxylic acid having 2 to 36 carbon atoms is preferable. Specifically, such polyolester includes an ester of a neopentyl-type polyol such as trimethylolpropane, pentaerythritol, or dipentaerythritol with an aliphatic, linear or branched monocarboxylic acid having 2 to 36 carbon atoms such as n-ethanoic acid, n-propanoic acid, n-butanoic acid, n-pentanoic acid, 2-methylpentanoic acid, 2-ethylpentanoic acid, n-hexanoic acid, 2-methylhexanoic acid, 2-ethylhexanoic acid, n-heptanoic acid, n-octanoic acid, n-nonanoic acid, n-decanoic acid, n-undecanoic acid, n-dodecanoic acid, n-tridecanoic acid, n-tetradecanoic acid, n-pentadecanoic acid, n-hexadecanoic acid, n-heptadecanoic acid, or n-octadecanoic acid. An ester obtained by reacting one neopentyl-type polyol with multiple fatty acids is preferable. At least one of the multiple fatty acids is preferably a branched fatty acid. In particular, an ester of pentaerythritol with a fatty acid mixture of linear or branched fatty acids having 7 to 10 carbon atoms or an ester of dipentaerythritol with a mixture of linear or branched fatty acids having 7 to 10 carbon atoms is preferable. Further in particular, an ester of pentaerythritol with a mixture of 2-methylhexanoic acid, n-heptanoic acid, and n-octanoic acid is preferable.

As the synthetic hydrocarbon oil, poly-α-olefin, polybutene, and ethylene-α-olefin copolymer are preferable.

The synthetic oil contained in the base oil of the present invention is preferably made of only poly-α-olefins from the viewpoint of wear resistance, peel resistance, and torque reduction. Among these, the synthetic oil is preferably made of only poly-α-olefins having a viscosity index of 125 or more from the viewpoint of low-temperature performance. Particularly, the synthetic oil is preferably made of only poly-α-olefins having a viscosity index of 125 or more and a pour point of -60°C or less.

The proportion of the base oil in the composition of the present invention is preferably 70% by mass or more, more preferably 75 to 90% by mass, and further preferably 75 to 85% by mass.

The base oil in the composition of the present invention contains a specific amount of a synthetic hydrocarbon oil, and 2 or more synthetic oils may be used together, and a mineral oil may be used together.

### <(c) Thickener>

The thickener used in the grease composition of the present invention is a urea-based thickener typified by diurea.

As the urea-based thickener, a diurea compound represented by the following formula (3) is used:

R1-NHCONH-R2-NHCONH-R3 (3)

wherein R2 represents a divalent aromatic hydrocarbon group having 6 to 15 carbon atoms, R1 and R3 may be the same or different and each represent an alkyl group having 6 to 30 carbon atoms or a cyclohexyl group, and the proportion of the number of moles of the cyclohexyl groups to the total number of moles of the cyclohexyl groups and the alkyl groups [{(the number of the cyclohexyl groups)/(the number of the cyclohexyl groups + the number of the alkyl groups)}×100] is 50 to 90% by mol. R2 is preferably tolylene diisocyanate or diphenylmethane diisocyanate, and more preferably diphenylmethane diisocyanate.

The proportion of the number of moles of the cyclohexyl groups to the total number of moles of the cyclohexyl groups and the alkyl groups [{(the number of the cyclohexyl groups)/(the number of the cyclohexyl groups + the number of the alkyl groups)}×100] is 50 to 90% by mol, preferably 70 to 90% by mol, and particularly preferably 80 to 90% by mol.

The alkyl group having 6 to 30 carbon atoms is preferably at least one the number of carbon atoms of which is selected from 8 and 18.

The diurea compound of the formula (3) can be obtained, for example, by reacting a certain diisocyanate and a certain monoamine in a base oil. Preferable specific examples of the diisocyanate include diphenylmethane-4,4'-diisocyanate and tolylene diisocyanate. The monoamine includes aliphatic amines, alicyclic amines, and mixtures of these. Specific examples of the aliphatic amines include octylamine, nonylamine, decylamine, undecylamine, dodecylamine, tridecylamine, tetradecylamine, pentadecylamine, hexadecylamine, heptadecylamine, octadecylamine, nonyldecylamine, eicodecylamine, and oleylamine. Specific examples of the alicyclic amines include cyclohexylamine and dicyclohexylamine. The reaction product of a diisocyanate and an aliphatic amine is referred to as an aliphatic diurea (that is, a compound in which the number of moles of cyclohexyl groups is 0% in the formula (3)). The reaction product of a diisocyanate and a mixture of an aliphatic amine and an alicyclic amine is referred to as an alicyclic aliphatic diurea (that is, a compound in which the number of moles of cyclohexyl groups exceeds 0% and 90% or less in the formula (3)). As the diurea-based thickener of the present invention, an alicyclic aliphatic diurea is preferable.

The content of the thickener in the grease composition of the present invention varies depending on the type of the thickener. The consistency of the grease composition of the present invention is preferably 200 to 400, and more preferably 250 to 350. The content of the thickener is an amount that is necessary to obtain this consistency. The content of the thickener is normally 3 to 30% by mass, preferably 5 to 25% by mass, and more preferably 7 to 15% by mass in the grease composition of the present invention. The dropping point of the grease composition of the present invention is preferably 200°C or more, and more preferably 230°C or more, from the viewpoint of heat resistance.

### <(d) Antioxidant>

Antioxidants are known as oxidation degradation inhibitors for grease. Antioxidants that can be used in the present invention include amine-based antioxidants and phenol-based antioxidants.

The amine-based antioxidants include alkyl diphenylamines (for example, a reaction product of N-phenylbenzenamine and 2,4,4-trimethylpentene), N-n-butyl-p-aminophenol, 4,4'-tetramethyl-diaminodiphenylmethane, α-naphthylamine, N-phenyl-α-naphthylamine, and phenothiazine. Alkyl diphenyl amines and N-phenyl-α-naphthylamine are preferable, and a reaction product of N-phenylbenzenamine and 2,4,4-trimethylpentene is more preferable.

The phenol-based antioxidants include n-octadecyl 3-(4'-hydroxy-3',5'-di-t-butylphenyl) propionate, 2,6-di-tertiary-butyl-p-cresol (BHT), 2,2'-methylenebis(4-methyl-6-tertiary-butylphenol), 4,4'-butylidenebis(3-methyl-6-tertiary-butylphenol), 2,6-di-tertiary-butyl-phenol, 2,4-dimethyl-6-tertiary-butylphenol, tertiary-butylated hydroxyanisole (BHA), 4,4'-butylidenebis(3-methyl-6-tertiary-butylphenol), 4,4'-methylenebis(2,3-di-tertiary-butylphenol), and 4,4'-thiobis(3-methyl-6-tertiary-butylphenol). 3-(4'-hydroxy-3',5'-di-tert-butylphenyl)propionic acid-n-octadecyl is preferable.

The content of the antioxidant is normally 0.1 to 10% by mass, preferably 0.5 to 5% by mass, and more preferably 1 to 4% by mass, relative to the total mass of the composition of the present invention, from the viewpoint of effects and economic efficiency.

The grease composition of the present invention may further contain various additives depending on necessity.

### [Anticorrosive]

Containing an anticorrosive makes it possible to provide a grease composition that does not rust or is unlikely to rust even when water is applied to the grease composition. As the anticorrosive, for example, amine-based anticorrosives, carboxylic acids and derivatives thereof; alkenyl succinic anhydrides, alkenyl succinic acid esters, alkenyl succinic acid half esters, carboxylic acid salts; amine salts of fatty acids, diprotic acids, naphthenic acid, lanolin fatty acids, and alkenyl succinic acids; passivators; sodium nitrite, sodium molybdate, and the like, esters; sorbitan trioleate and sorbitan monooleate, metal corrosion preventives; benzotriazole or derivatives thereof, zinc oxide, and the like are preferably used.

The content of the anticorrosive is normally 0.05 to 5% by mass, preferably 0.10 to 4 mass%, and more preferably 0.25 to 3 mass%, relative to the total mass of the composition of the present invention, from the viewpoint of effects and economic efficiency.

### [Extreme Pressure Agent]

Phosphorus-based compounds such as tricresyl phosphate, tri(2-ethylhexyl)phosphate, amine phosphates, triphenyl phosphorothioate, and derivatives thereof; sulfur-based compounds such as dibenzyl disulfide and various polysulfides; sulfur-phosphorus-based compounds such as triphenyl phosphorothionate; organic metal-based extreme pressure agents such as Zn, Mo, Sb, Bi or other metal salts of dialkyl dithiophosphoric acids, Zn, Mo, Sb, Ni, Cu, Bi or other metal salts of dialkyl dithiocarbamic acids, ashless dithiocarbamate or ashless dithiophosphate carbamate; solid lubricants such as molybdenum disulfide, graphite, PTFE, MCA, and the like.

The grease composition of the present invention preferably contains at least one selected from amine phosphate, triphenyl phosphorothioate and derivatives thereof, Zn and Mo of dialkyl dithiophosphoric acid, and Zn and Mo of dialkyl dithiocarbamic acid, and further preferably contains at least one selected from amine phosphates and a Mo salt of dialkyl dithiocarbamic acid. As the amine phosphate, a tertiary-alkyl-dimethyl phosphate is preferable. As the Mo salt of dialkyl dithiocarbamic acid, molybdenum dithiocarbamate (MoDTC) is preferable. As the amine phosphate, a commercial product such as Vanlube 672 (tertiary-alkylamine-dimethyl phosphate) manufactured by R.T.Vanderbilt can be utilized.

A preferable example of MoDTC can be represented by the following formula (4):

[R₅R₆N-CS-S]₂-Mo₂OmSn (4)

wherein R₅ and R₆ may be the same or different and each independently represent a linear or branched alkyl group having 1 to 24 carbon atoms and preferably 3 to 18 carbon atoms, m is 0 to 3, n is 4 to 1, and m + n = 4.

The content of the extreme pressure agent is a general amount, and is normally about 0.1 to 10% by mass relative to the entire grease composition. The content of the extreme pressure agent is preferably 0.3 to 5% by mass and more preferably 0.5 to 3% by mass.

### <Applicable parts>

Mechanical parts for which the composition of the present invention is used are not particularly limited, but tapered roller bearings are preferable, and tapered roller bearings for use in axles of railroad vehicles and automobiles are particularly preferable. In what follows, Examples 11, 13 and 14 are reference examples not according to the invention and Examples 1 to 10 and 12 illustrate the invention.

### Examples

Grease compositions that contain alicyclic aliphatic diureas (Examples 1 to 10 and 12 according to the invention, Example 11 not according to the invention, and Comparative Examples 1 to 4) as thickeners were prepared as follows. Predetermined amounts of raw material amines (cyclohexylamine and stearylamine, the molar ratio was cyclohexylamine :stearylamine = 7:1) were reacted with 4.4'-diphenylmethane diisocyanate in a ratio of 2 moles of the raw material amines per mole of 4.4'-diphenylmethane diisocyanate in a base oil, followed by heating and cooling to obtain a base grease. Predetermined amounts of additives were mixed with the base oil, and the mixtures were added to and mixed well with the base grease, followed by milling with a three roll mill to produce grease compositions having a worked penetration of 250 to 350 (JIS K2220) and a dropping point of 260°C or more (JIS K2220).

A grease composition not according to the invention that contains an aliphatic diurea (Example 13) as a thickener was prepared as follows. Predetermined amounts of raw material amines (octylamine and stearylamine, the molar ratio was octylamine:stearylamine = 5:5) were reacted with 4.4'-diphenylmethane diisocyanate in a ratio of 2 moles of the raw material amines per mole of 4.4'-diphenylmethane diisocyanate in a base oil, followed by heating and cooling to obtain a base grease. Predetermined amounts of additives were mixed with the base oil, and the mixture was added to and mixed well with the base grease, followed by milling with a three roll mill to produce a grease composition having a worked penetration of 300 (JIS K2220) and a dropping point of 260°C or more (JIS K2220).

A grease composition not according to the invention that contains a Li-complex soap (Example 14) as a thickener was prepared as follows. Azelaic acid and 12-hydroxystearic acid were inputted in a base oil. After heating, a lithium hydroxide aqueous solution was added, followed by heating again and cooling to obtain a base grease. Predetermined amounts of additives were mixed with the base oil, and the mixture was added to and mixed well with the base grease, followed by milling with a three roll mill to produce a grease composition having a worked penetration of 300 (JIS K2220) and a dropping point of 260°C or more (JIS K2220).

Details of the components used for producing each grease are as follows.

### (a) Additives

Organic calcium sulfonate A: a calcium salt of highly basic alkyl benzenesulfonic acid (base number: 405)
Organic calcium sulfonate B: a calcium salt of dinonylnaphthalenesulfonic acid (base number: 0.26)
Organic zinc sulfonate A: a zinc salt of dinonylnaphthalenesulfonic acids (base number: 0.50)
Organic sodium sulfonate A: a sodium salt of alkyl naphthalene sulfonic acid (base number: 0.20)
Calcium carbonate A: CaCO₃ (average particle size 2 µm)
Aluminum carbonate A: Al₂(CO₃)₃ ( average particle size 4 µm)

Note that the base numbers were values measured in accordance with JIS K 2501.

### (b) Base Oil

Synthetic hydrocarbon oil A: poly-α-olefin (40°C kinematic viscosity; 62.1 mm²/s, 100°C; 9.93 mm²/s, pour point: -60°C, viscosity index: 145)
Mineral oil A: refined mineral oil (40°C kinematic viscosity; 102 mm²/s, 100°C; 11.3 mm²/s, pour point: -12.5°C, viscosity index 97)
Mineral oil B: refined mineral oil (40°C kinematic viscosity; 40.3 mm²/s, 100°C; 6.24 mm²/s, pour point: -12.5°C, viscosity index 101)
Note that the kinematic viscosity of each base oil at 40°C was measured in accordance with JIS K 2283. The pour point of each base oil was measured in accordance with JIS K 2269. The viscosity index was measured in accordance with JIS K 2283.

### (d) Antioxidant

Amine-based antioxidant A: alkyl diphenylamine (a reaction product of N-phenylbenzenamine and 2,4,4-trimethylpentene, Cas No. 68411-46-1)

### <Test Method and Judgment>

### [Wear Resistance and Peel Resistance (FE8)]

### • Judgment Method

Tests were conducted with the FE8 endurance test using tapered roller bearings according to DIN 51819. The initial period 48 h of the operation out of the test time is assumed to be a break-in period. The test conditions are shown below.
Bearing form: 31312, one tapered roller bearing was mounted on each of the motor side and the non-motor side.
Test temperature: 160°C (the test temperature during the break-in operation was room temperature.)
Test time: 500 h
Rotation speed: 750 rpm
Total amount of the grease: 400 cm³
Motor-side bearing, outer race: 25 cm³, inner race: 25 cm³, roller: 75 cm³,
Non-motor-side bearing, outer race: 25 cm³, inner race: 25 cm³, roller: 75 cm³,
Distance between the motor-side bearing and the non-motor-side bearing: 150 3 cm
Test load: axial load 20 kN
Measured item: wear amount (g)

### <Evaluation>

The differences between the total mass of the outer race, the inner race, the roller, and the cage before the test and the total mass of the outer race, the inner race, the roller, and the cage after the test on the motor-side and the non-motor-side were calculated, and the average values thereof was used as a measurement result.

### • Judgment

| | |
|---|---|
| Total wear amount: | 0.05 g or less ... ⊚(passed) |
| | 0.10 g or less ... ∘ (passed) |
| | 0.10 g or more ... × (failed) |

### [Torque Reduction (FE8)]

### • Evaluation Method

Tests were conducted with the FE8 endurance test using tapered roller bearings according to DIN 51819. The initial period 48 hours of the operation out of the test time is assumed to be a break-in period. The test conditions are shown below.
Bearing form: 31312, one pair of tapered roller bearings were mounted on each of the motor side and the non-motor side.
Test temperature: 160°C (the test temperature during the break-in operation is room temperature )
Test time: 500 h
Rotation speed: 750 rpm
Total amount of the grease: 400 cm³
Motor-side bearing, outer race: 25 cm³, inner race: 25 cm³, roller: 75 cm³,
Non-motor-side bearing, outer race: 25 cm³, inner race: 25 cm³, roller: 75 cm³,
Distance between the motor-side bearing and the non-motor-side bearing: 150 3 cm
Test load: axial load 20 kN
Measured item: bearing torque (Nm)

### <Evaluation>

The average value of the bearing torque for the last one hour of the test was calculated as a measurement value.

### • Judgment

| | |
|---|---|
| Bearing torque: | 4.0 Nm or less ... ⊚(passed) |
| | 5.0 Nm or less ... ∘ (passed) |
| | 5.0 Nm or more ... × (failed) |

### [Low-temperature Performance (Flow Pressure)]

The fluidity of the grease compositions under a low temperature environment was evaluated in this test. The fluidity is involved in the cold start performance and the low-temperature fretting resistance.

### • Evaluation Method

Tests were conducted with the flow pressure test according to DIN 51805. The test conditions are shown below.
Test temperature: -35°C
Measured item: pressure (mbar)

### <Evaluation>

The pressure at which the grease flowed out was used as a flow pressure and as a measurement value.

### • Judgment

| | |
|---|---|
| Flow pressure: | 1000 mbar or less ... ⊚(passed) |
| | 1700 mbar or less ... ∘ (passed) |
| | 1700 mbar or more ... × (failed) |

### Overall judgment

All of the evaluation on wear resistance and peel resistance, the evaluation on torque reduction, and the evaluation on low-temperature performance were passed: o (passed).

Any one of these evaluations was failed: × (failed).

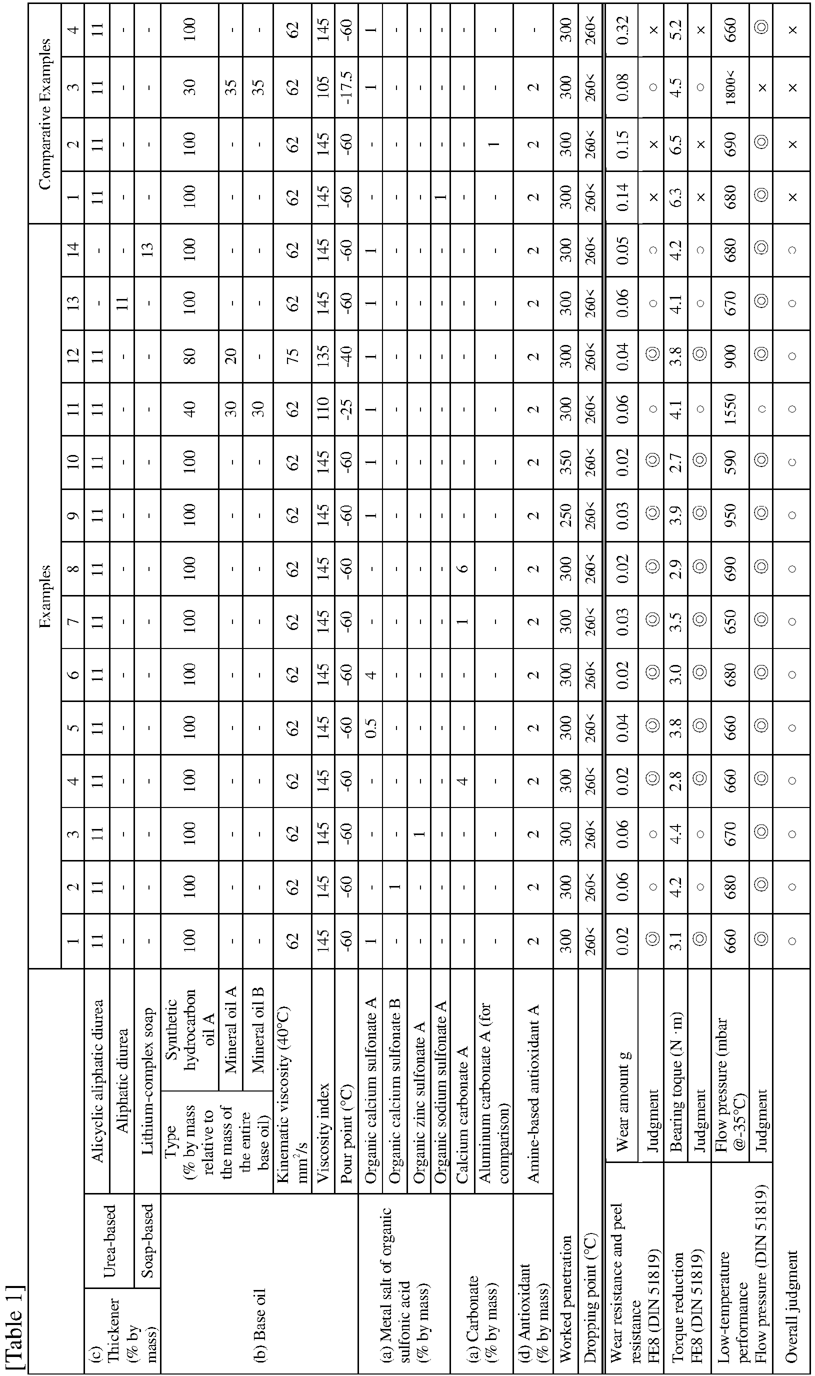

As shown in Table 1, it is understood that the lubricant compositions of Examples 1 to 14, each of which contained an organic metallic salt or inorganic metallic salt having a metallic group having a valence of 2 as an additive, were thus favorable in wear resistance and peel resistance as well as torque reduction as compared with Comparative Example 1, which contained an organic metallic salt having a metallic group having a valence of 1 as an additive, and Comparative Example 2, which contained an inorganic metallic salt having a metallic group having a valence of 3. In addition, it is understood that the lubricant compositions of Examples 1 to 14, which each contained a synthetic oil in a certain proportion, were thus favorable in low-temperature performance as compared with Comparative Example 3, which contained no synthetic oil. Moreover, it is understood that the lubricant compositions of Examples 1 to 14, which each contained an antioxidant, were thus favorable in wear resistance and peel resistance as compared with Comparative Example 4, which contained no antioxidant.

## Claims

1. A grease composition for a tapered roller bearing, comprising:
(a) at least one compound selected from the group consisting of metallic salts each having a metallic group having a valence of 2 as an additive;
(b) a base oil containing a synthetic hydrocarbon oil having a viscosity index of 110 or more and a pour point of -35°C or less in an amount of 60 mass% or more of the entire base oil;
(c) a thickener; and
(d) an antioxidant,
wherein the thickener is a diurea compound represented by the following formula (3):
R1-NHCONH-R2-NHCONH-R3 (3)
wherein R2 represents a divalent aromatic hydrocarbon group having 6 to 15 carbon atoms, R1 and R3 may be the same or different and each represent an alkyl group having 6 to 30 carbon atoms or a cyclohexyl group, and the proportion of the number of moles of the cyclohexyl groups to the total number of moles of the cyclohexyl groups and the alkyl groups [{(the number of the cyclohexyl groups)/(the number of the cyclohexyl groups + the number of the alkyl groups)}×100] is 50 to 90% by mol.

2. The grease composition for a tapered roller bearing according to claim 1, wherein the component (a) is represented by the following formula (1) or (2): [
R4- SO₃]M¹ (1)
wherein R4 represents an alkyl group, an alkenyl group, an alkyl naphthyl group, a dialkyl naphthyl group, and an alkyl phenyl group, the alkyl or alkenyl is linear or branched and has 2 to 22 carbon atoms, and M¹ represents an alkaline earth metal or zinc, and
M²CO₃ (2)
wherein M² represents an alkaline earth metal or zinc.

3. The grease composition for a tapered roller bearing according to claim 1 or 2, wherein the component (a) is at least one selected from the group consisting of organic calcium sulfonates, organic zinc sulfonates, calcium carbonate, and zinc carbonate.

4. The grease composition for a tapered roller bearing according to any one of claims 1 to 3, wherein the amount of the synthetic hydrocarbon oil contained in the component (b) is 80 mass% or more.

5. The grease composition for a tapered roller bearing according to any one of claims 1 to 4, wherein a kinematic viscosity of the synthetic hydrocarbon oil contained in the component (b) at 40°C is 15 to 5000 mm²/s, and
a kinematic viscosity of the entire component (b) at 40°C is 20 to 300 mm²/s.

6. The grease composition according to any one of the preceding claims, wherein the (d) antioxidant contains at least one selected from the group consisting of amine-based antioxidants and phenol-based antioxidants.

7. The grease composition according to any one of the preceding claims, wherein the antioxidant is at least one selected from the group consisting of alkyl diphenylamines, N-phenyl-α-naphthylamine, 3-(4'-hydroxy-3',5'-di-tert-butylphenyl)propionic acid-n-octadecyl, 2,6-di-tertiary-butyl-p-cresol (BHT), 2,2'-methylenebis(4-methyl-6-tertiary-butylphenol), 4,4'-butylidenebis(3-methyl-6-tertiary-butylphenol), 2,6-di-tertiary-butyl-phenol, 2,4-dimethyl-6-tertiary-butylphenol, tertiary-butylated hydroxyanisole (BHA), 4,4'-butylidenebis(3-methyl-6-tertiary-butylphenol), 4,4'-methylenebis(2,3-di-tertiary-butylphenol), and 4,4'-thiobis(3-methyl-6-tertiary-butylphenol).

8. The grease composition for a tapered roller bearing according to any one of the preceding claims, wherein a dropping point of the grease composition for a tapered roller bearing is 230°C or more as measured in accordance with JIS K2220.

## Patentansprüche

1. Fettzusammensetzung für ein Kegelrollenlager, umfassend:
(a) mindestens eine Verbindung, ausgewählt aus der Gruppe bestehend aus Metallsalzen jeweils mit einer Metallgruppe mit einer Valenz von 2, als Additiv,
(b) ein Basisöl, das ein synthetisches Kohlenwasserstofföl mit einem Viskositätsindex von 110 oder mehr und einem Stockpunkt von -35 °C oder weniger in einer Menge von 60 Massen-% oder mehr des gesamten Basisöls enthält,
(c) ein Verdickungsmittel, und
(d) ein Antioxidans,
wobei das Verdickungsmittel eine Diharnstoffverbindung ist, dargestellt durch die folgende Formel (3):
R1-NHCONH-R2-NHCONH-R3 (3)
wobei R2 für eine zweiwertige aromatische Kohlenwasserstoffgruppe mit 6 bis 15 Kohlenstoffatomen steht, R1 und R3 gleich oder verschieden sein können und jeweils für eine Alkylgruppe mit 6 bis 30 Kohlenstoffatomen oder eine Cyclohexylgruppe stehen, und der Anteil der Molzahl der Cyclohexylgruppen zu der Gesamtmolzahl der Cyclohexylgruppen und der Alkylgruppen [{(die Anzahl der Cyclohexylgruppen)/(die Anzahl der Cyclohexylgruppen + die Anzahl der Alkylgruppen)}×100] 50 bis 90 Mol-% beträgt.

2. Fettzusammensetzung für ein Kegelrollenlager nach Anspruch 1, wobei die Komponente (a) durch die folgende Formel (1) oder (2) dargestellt wird:
[R4- SO₃]M¹ (1)
wobei R4 für eine Alkylgruppe, eine Alkenylgruppe, eine Alkylnaphthylgruppe, eine Dialkylnaphthylgruppe und eine Alkylphenylgruppe steht, das Alkyl oder Alkenyl linear oder verzweigt ist und 2 bis 22 Kohlenstoffatome aufweist, und M¹ für ein Erdalkalimetall oder Zink steht, und
M²CO₃ (2)
wobei M² für ein Erdalkalimetall oder Zink steht.

3. Fettzusammensetzung für ein Kegelrollenlager nach Anspruch 1 oder 2, wobei die Komponente (a) mindestens eine ist, die ausgewählt ist aus der Gruppe bestehend aus organischen Calciumsulfonaten, organischen Zinksulfonaten, Calciumcarbonat und Zinkcarbonat.

4. Fettzusammensetzung für ein Kegelrollenlager nach einem der Ansprüche 1 bis 3, wobei die Menge des in der Komponente (b) enthaltenen synthetischen Kohlenwasserstofföls 80 Massen-% oder mehr beträgt.

5. Fettzusammensetzung für ein Kegelrollenlager nach einem der Ansprüche 1 bis 4, wobei eine kinematische Viskosität des in der Komponente (b) enthaltenen synthetischen Kohlenwasserstofföls bei 40 °C 15 bis 5000 mm²/s beträgt, und
eine kinematische Viskosität der Gesamtkomponente (b) bei 40 °C 20 bis 300 mm²/s beträgt.

6. Fettzusammensetzung nach einem der vorstehenden Ansprüche, wobei das (d) Antioxidans mindestens eines enthält, das ausgewählt ist aus der Gruppe bestehend aus Antioxidanzien auf Aminbasis und Antioxidanzien auf Phenolbasis.

7. Fettzusammensetzung nach einem der vorstehenden Ansprüche, wobei das Antioxidans mindestens eines ist, das ausgewählt ist aus der Gruppe bestehend aus Alkyldiphenylaminen, N-Phenyl-α-naphthylamin, 3-(4'-Hydroxy-3',5'-di-tert-butylphenyl)propionsäure-n-octadecyl, 2,6-Di-tert-butyl-p-kresol (BHT), 2,2'-Methylenbis(4-methyl-6-tert-butylphenol), 4,4'-Butylidenbis(3-methyl-6-tert-butylphenol), 2,6-Di-tert-butylphenol, 2,4-Dimethyl-6-tert-butylphenol, tertbutyliertem Hydroxyanisol (BHA), 4,4'-Butylidenbis(3-methyl-6-tert-butylphenol), 4,4'-Methylenbis(2,3-di-tert-butylphenol) und 4,4'-Thiobis(3-methyl-6-tert-butylphenol).

8. Fettzusammensetzung für ein Kegelrollenlager nach einem der vorstehenden Ansprüche, wobei ein Tropfpunkt der Fettzusammensetzung für ein Kegelrollenlager bei Messung gemäß JIS K2220 230 °C oder mehr beträgt.

## Revendications

1. Composition de graisse pour un roulement à rouleaux coniques, comprenant :
(a) au moins un composé choisi dans le groupe consistant en sels métalliques ayant chacun un groupe métallique ayant une valence de 2 comme un additif ;
(b) une huile de base contenant une huile hydrocarbonée synthétique ayant un indice de viscosité de 110 ou supérieur et un point de versement de -35°C ou inférieur dans une quantité de 60 % en masse ou supérieure de l'huile de base entière ;
(c) un épaississant ; et
(d) un antioxydant,
dans laquelle l'épaississant est un composé de diurée représenté par la formule (3) suivante :
R1-NHCONH-R2-NHCONH-R3 (3)
dans laquelle R2 représente un groupe hydrocarboné aromatique divalent ayant de 6 à 15 atomes de carbone, R1 et R3 peuvent être identiques ou différents et représentent chacun un groupe alkyle ayant de 6 à 30 atomes de carbone ou un groupe cyclohexyle, et la proportion du nombre de moles des groupes cyclohexyle au nombre total de moles des groupes cyclohexyle et des groupes alkyle [{(le nombre des groupes cyclohexyle)/(le nombre des groupes cyclohexyle + le nombre des groupes alkyle)}x100] est de 50 à 90 % en mole.

2. Composition de graisse pour un roulement à rouleaux coniques selon la revendication 1, dans laquelle le constituant (a) est représenté par la formule (1) ou (2) suivante :
[R4- SO₃]M¹ (1)
dans laquelle R4 représente un groupe alkyle, un groupe alcényle, un groupe alkyl naphtyle, un groupe dialkyl naphtyle, et un groupe alkyl phényle, l'alkyle ou l'alcényle est linéaire ou ramifié et présente de 2 à 22 atomes de carbone, et M¹ représente un métal alcalino-terreux ou le zinc, et
M²CO₃ (2)
dans laquelle M² représente un métal alcalino-terreux ou le zinc.

3. Composition de graisse pour un roulement à rouleaux coniques selon la revendication 1 ou 2, dans laquelle le constituant (a) est au moins un choisi dans le groupe consistant en sulfonates de calcium organiques, sulfonates de zinc organiques, carbonate de calcium, et carbonate de zinc.

4. Composition de graisse pour un roulement à rouleaux coniques selon l'une quelconque des revendications 1 à 3, dans laquelle la quantité de l'huile hydrocarbonée synthétique contenue dans le constituant (b) est de 80 % en masse ou supérieure.

5. Composition de graisse pour un roulement à rouleaux coniques selon l'une quelconque des revendications 1 à 4, dans laquelle une viscosité cinématique de l'huile hydrocarbonée synthétique contenue dans le constituant (b) à 40°C est de 15 à 5 000 mm²/s, et
une viscosité cinématique du constituant entier (b) à 40°C est de 20 à 300 mm²/s.

6. Composition de graisse selon l'une quelconque des revendications précédentes, dans laquelle l'antioxydant (d) contient au moins un choisi dans le groupe consistant en antioxydants à base d'amine et antioxydants à base de phénol.

7. Composition de graisse selon l'une quelconque des revendications précédentes, dans laquelle l'antioxydant est au moins un choisi dans le groupe consistant en alkyl diphénylamines, N-phényl-α-naphthylamine, acide 3-(4'-hydroxy-3',5'-di-tert-butylphényl)propioniquen-octadécyle, 2,6-di-butyle tertiaire-p-crésol (BHT), 2,2'-méthylènebis(4-méthyl-6-butylphénol tertiaire), 4,4'-butylidènebis(3-méthyl-6-butylphénol tertiaire), 2,6-di-butylphénol tertiaire, 2,4-diméthyl-6-butylphénol tertiaire, hydroxyanisole butylé tertiaire (BHA), 4,4'-butylidènebis(3-méthyl-6-butylphénol tertiaire), 4,4'-méthylènebis(2,3-di-butylphénol tertiaire), et 4,4'-thiobis(3-méthyl-6-butylphénol tertiaire).

8. Composition de graisse pour un roulement à rouleaux coniques selon l'une quelconque des revendications précédentes, dans laquelle un point de goutte de la composition de graisse pour un roulement à rouleaux coniques est de 230°C ou supérieur comme mesuré selon JIS K2220.
